(19) **Europäisches Patentamt European Patent Office Office européen des brevets**

(11) **EP 4 568 183 A1**

(12) **EUROPEAN PATENT APPLICATION**
published in accordance with Art. 153(4) EPC

(43) Date of publication:
**11.06.2025 Bulletin 2025/24**

(21) Application number: **23854515.6**

(22) Date of filing: **18.08.2023**

(51) International Patent Classification (IPC):
**H04L 12/14** (2024.01)    **G06F 9/50** (2006.01)

(52) Cooperative Patent Classification (CPC):
**G06F 9/50; H04L 12/14**

(86) International application number:
**PCT/CN2023/113707**

(87) International publication number:
**WO 2024/037618 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.08.2022   CN 202210990416**
**14.02.2023   CN 202310122957**

(71) Applicant: **Huawei Cloud Computing Technologies Co., Ltd.**
**Guiyang, Guizhou 550025 (CN)**

(72) Inventors:
• **ZHOU, Mosong**
  **Shenzhen, Guangdong 518129 (CN)**
• **ZHU, Lei**
  **Shenzhen, Guangdong 518129 (CN)**
• **PENG, Qian**
  **Shenzhen, Guangdong 518129 (CN)**
• **CHEN, Fujun**
  **Shenzhen, Guangdong 518129 (CN)**
• **ZHANG, Shaozhi**
  **Shenzhen, Guangdong 518129 (CN)**
• **MA, Shijia**
  **Shenzhen, Guangdong 518129 (CN)**
• **YANG, Changpeng**
  **Shenzhen, Guangdong 518129 (CN)**

(74) Representative: **Maiwald GmbH**
**Engineering**
**Elisenhof**
**Elisenstrasse 3**
**80335 München (DE)**

(54) **PUBLIC CLOUD-BASED CLOUD RESOURCE CONVERSION METHOD AND CLOUD MANAGEMENT PLATFORM**

(57)    This application provides a public cloud-based cloud resource conversion method and a cloud management platform. The method is applied to the cloud management platform. The method includes: The cloud management platform receives, from a cloud resource configuration interface, cloud resource configuration information input by a tenant. The cloud management platform creates, in an infrastructure based on the cloud resource configuration information, a cloud resource that belongs to the tenant as a stable cloud resource. The cloud management platform provides a cloud resource type conversion interface, configured to receive a first cloud resource type conversion policy input by the tenant.

The cloud management platform converts, according to the first cloud resource type conversion policy, a type attribute of the cloud resource from a stable cloud resource type to an unstable cloud resource type, performs billing on use of the cloud resource in a preferential manner, and stops providing the cloud resource for the tenant when the tenant does not actively release the cloud resource and idle resources are insufficient. In this application, a cloud resource type conversion function is provided, so that a cloud resource type of the tenant can be randomly switched, thereby improving flexibility of using the cloud resource by the tenant.

Cloud management platform 10

Client 20

S101: Provide a cloud resource configuration interface

S102: A tenant 40 inputs cloud resource configuration information A

S103: Create, in an infrastructure based on the cloud resource configuration information A input by the tenant 40 to the cloud resource configuration interface, a cloud resource that belongs to the tenant 40

S104: Provide a cloud resource type conversion interface

S105: The tenant 40 inputs a cloud resource type conversion policy A through the cloud resource type conversion interface

S106: Convert a type attribute of the cloud resource of the tenant 40 from a stable cloud resource type to an unstable cloud resource type according to the cloud resource type conversion policy A input by the tenant 40

S107: The tenant 40 inputs a cloud resource type conversion policy B through the cloud resource type conversion interface

S108: Convert the type attribute of the cloud resource of the tenant 40 from the stable cloud resource type to the unstable cloud resource type according to the cloud resource type conversion policy B input by the tenant 40

FIG. 2

**Description**

**TECHNICAL FIELD**

This application relates to the field of cloud technologies, and in particular, to a public cloud-based cloud resource conversion method and a cloud management platform.

**BACKGROUND**

A cloud vendor provides a cloud resource for a tenant to implement a cloud service. The cloud vendor provides different billing modes for different cloud resource types to meet different requirements of the tenant for cloud resources in different service scenarios. Generally, the cloud resource is provided to the tenant in yearly/monthly mode or pay-per-use mode. Costs of the tenant are high. In addition, because most services have a specific idle periodicity, resource utilization is low in this mode. To improve cloud resource utilization, the cloud vendor provides idle cloud resources to the tenant through spot pricing. This reduces the costs of the tenant. However, the idle resources may be reclaimed at any time. Therefore, in this mode, tenant service data may be lost.

**SUMMARY**

This application provides a public cloud-based cloud resource conversion method and a cloud management platform. A cloud resource type conversion function is provided, so that a cloud resource type of a tenant can be randomly switched, thereby improving flexibility of using a cloud resource by the tenant.

According to a first aspect, this application provides a public cloud-based cloud resource conversion method. The method is applied to a cloud management platform, the cloud management platform is configured to manage an infrastructure that provides a public cloud service, the infrastructure includes a plurality of cloud data centers disposed in different regions, and at least one cloud data center is disposed in each region. The method includes: The cloud management platform receives, from a cloud resource configuration interface, cloud resource configuration information input by a tenant, where the cloud resource configuration information includes a specification and a type attribute of a to-be-created cloud resource, and the type attribute indicates that the cloud resource is a stable cloud resource type. The cloud management platform creates, in the infrastructure based on the cloud resource configuration information, a cloud resource that has the specification and the type attribute and that is used by the tenant. The cloud management platform receives, from a cloud resource type conversion interface, a first cloud resource type conversion policy input by the tenant, where the first cloud resource type conversion policy indicates to convert the type attribute of the cloud resource from the stable cloud resource type to an unstable cloud resource type. The cloud management platform converts the type attribute of the cloud resource from the stable cloud resource type to the unstable cloud resource type, performs billing on use of the cloud resource in a preferential manner, and stops providing the cloud resource for the tenant when the tenant does not actively release the cloud resource and idle resources are insufficient.

Based on the foregoing method, the tenant may create, through the cloud resource configuration interface provided by the cloud management platform, a cloud resource whose specification and type attribute meet a service requirement of the tenant. The tenant may further switch a type attribute of a purchased cloud resource through the cloud resource type conversion interface provided by the cloud management platform, improving flexibility of using the cloud resource by the tenant and reducing purchase costs of the cloud resource.

In a possible implementation of the first aspect, after the cloud management platform converts, according to the first cloud resource type conversion policy, the type attribute of the cloud resource from the stable cloud resource type to the unstable cloud resource type, the cloud resource type conversion interface is further configured to receive a second cloud resource type conversion policy input by the tenant, where the second cloud resource type conversion policy indicates to convert the type attribute of the cloud resource from the unstable cloud resource type to the stable cloud resource type. The method further includes: The cloud management platform converts the type attribute of the cloud resource from the unstable cloud resource type to the stable cloud resource type, performs billing on use of the cloud resource in a non-preferential manner, and keeps providing the cloud resource for the tenant when the tenant does not actively release the cloud resource and the idle resources are insufficient.

Based on the foregoing method, the tenant may convert, through the cloud resource type conversion interface provided by the cloud management platform, the type attribute of the purchased cloud resource from the stable cloud resource type to the unstable cloud resource type, and then convert the type attribute from the unstable cloud resource type to the stable cloud resource type. The type attribute of the purchased cloud resource is switched for a plurality of times, so that a usage manner of the cloud resource better meets a requirement brought by a change of a service of the cloud resource.

In a possible implementation of the first aspect, the cloud management platform counts type attribute conversion times of the cloud resource, and when the type attribute conversion times of the cloud resource exceed a threshold, forbids performing next conversion, or charges the tenant for the next conversion.

Based on the foregoing method, the cloud management platform imposes a specific constraint on the type attribute conversion times of the cloud resource of the tenant, to better manage a conversion service of the type attribute of the cloud resource of the tenant. This avoids service burdens of the cloud management platform caused by a plurality of conversion times.

In a possible implementation of the first aspect, the cloud management platform calculates a type attribute conversion ratio of the cloud resource, and when the type attribute conversion ratio of the cloud resource exceeds a threshold, forbids performing conversion, or charges the tenant.

Based on the foregoing method, the cloud management platform imposes a specific constraint on the type attribute conversion ratio of the cloud resource of the tenant, to better manage a conversion service of the type attribute of the cloud resource of the tenant. This facilitates proper allocation of cloud resources.

In a possible implementation of the first aspect, after the cloud management platform creates, in the infrastructure based on the cloud resource configuration information, the cloud resource that belongs to the tenant and has the specification and the type attribute, the method includes: The cloud management platform performs billing on use of the cloud resource in the non-preferential manner based on the stable cloud resource type indicated by the type attribute, and keeps providing the cloud resource for the tenant when the tenant does not actively release the cloud resource and the idle resources of the cloud resource are insufficient.

Based on the foregoing method, the cloud management platform performs billing on use of the cloud resource in the non-preferential manner for a requirement of the stable cloud resource type of the tenant, and keeps the cloud resource when the tenant does not actively release the cloud resource and the idle resources of the cloud resource are insufficient. This ensures a usage requirement of a stable cloud resource purchased by the tenant.

In a possible implementation of the first aspect, the stable cloud resource type is any one of a pay-per-use billing type, a yearly/monthly billing type, and a reserved instance type.

Based on the foregoing method, there are a plurality of stable cloud resource types purchased by the tenant, which can meet different usage requirements of the tenant for the stable cloud resource type.

In a possible implementation of the first aspect, the unstable cloud resource type is a spot pricing billing type or a spot block billing type.

Based on the foregoing method, there are a plurality of unstable cloud resource types purchased by the tenant, which can meet different usage requirements of the tenant for the unstable cloud resource type.

In a possible implementation of the first aspect, the cloud resource is any one of a computing resource, a network resource, or a storage resource.

Based on the foregoing method, there are a plurality of types of cloud resources purchased by the tenant. This ensures flexibility of using different cloud resources by the tenant for different service scenarios.

According to a second aspect, this application provides another public cloud-based cloud resource conversion method. The method is applied to a cloud management platform, the cloud management platform is configured to manage an infrastructure that provides a public cloud service, the infrastructure includes a plurality of cloud data centers disposed in different regions, and at least one cloud data center is disposed in each region. The method includes: The cloud management platform receives, from a cloud resource configuration interface, cloud resource configuration information input by a tenant, where the cloud resource configuration information includes a specification and a type attribute of a to-be-created cloud resource, and the type attribute indicates that the cloud resource is an unstable cloud resource type. The cloud management platform creates, in the infrastructure based on the cloud resource configuration information, a cloud resource that has the specification and the type attribute and that is used by the tenant. The cloud management platform receives, from a cloud resource type conversion interface, a first cloud resource type conversion policy input by the tenant, where the first cloud resource type conversion policy indicates to convert the type attribute of the cloud resource from an unstable cloud resource type to the stable cloud resource type. The cloud management platform converts the type attribute of the cloud resource from the unstable cloud resource type to the stable cloud resource type, performs billing on use of the cloud resource in a non-preferential manner, and keeps providing the cloud resource for the tenant when the tenant does not actively release the cloud resource and idle resources are insufficient.

Based on the foregoing method, the tenant may create, through the cloud resource configuration interface provided by the cloud management platform, a cloud resource whose specification and type attribute meet a service requirement of the tenant. The tenant may further switch a type attribute of a purchased cloud resource through the cloud resource type conversion interface provided by the cloud management platform, improving flexibility of using the cloud resource by the tenant and reducing purchase costs of the cloud resource.

In a possible implementation of the second aspect, after the cloud management platform converts, according to the first cloud resource type conversion policy, the type attribute of the cloud resource from the unstable cloud resource type to the stable cloud resource type, the cloud resource type conversion interface is further configured to receive a second cloud resource type conversion policy input by the tenant, where the second cloud resource type conversion policy indicates to convert the type attribute of the cloud resource from the stable cloud resource type to the unstable cloud resource type. The method further includes: The cloud management platform converts the type attribute of the cloud resource from the stable cloud resource type to the unstable cloud resource type, performs billing on use of the cloud resource in a preferential manner, and stops providing the cloud resource for the tenant when the tenant does not actively release the cloud resource and the idle resources are insufficient.

Based on the foregoing method, the tenant may convert, through the cloud resource type conversion interface provided by the cloud management platform, the type attribute of the purchased cloud resource from the unstable cloud resource type to the stable cloud resource type, and then convert the type attribute from the stable cloud resource type to the unstable cloud resource type. The type attribute of the purchased cloud resource is switched for a plurality of times, so that a usage manner of the cloud resource better meets a requirement brought by a change of a service of the cloud resource.

In a possible implementation of the second aspect, the cloud management platform counts type attribute conversion times of the cloud resource, and when the type attribute conversion times of the cloud resource exceed a threshold, forbids performing next conversion, or charges the tenant for the next conversion.

Based on the foregoing method, the cloud management platform imposes a specific constraint on the type attribute conversion times of the cloud resource of the tenant, to better manage a conversion service of the type attribute of the cloud resource of the tenant. This avoids service burdens of the cloud management platform caused by a plurality of conversion times.

In a possible implementation of the second aspect, the cloud management platform calculates a type attribute conversion ratio of the cloud resource, and when the type attribute conversion ratio of the cloud resource exceeds a threshold, forbids performing conversion, or charges the tenant.

Based on the foregoing method, the cloud management platform imposes a specific constraint on the type attribute conversion ratio of the cloud resource of the tenant, to better manage a conversion service of the type attribute of the cloud resource of the tenant. This facilitates proper allocation of cloud resources.

In a possible implementation of the second aspect, after the cloud management platform creates, in the infrastructure based on the cloud resource configuration information, the cloud resource that belongs to the tenant and has the specification and the type attribute, the method includes: The cloud management platform performs billing on use of the cloud resource in the preferential manner based on the unstable cloud resource type indicated by the type attribute, and stops providing the cloud resource for the tenant when the tenant does not actively release the cloud resource and the idle resources are insufficient.

Based on the foregoing method, the cloud management platform performs billing on use of the cloud resource in the preferential manner for a requirement of the unstable cloud resource type of the tenant, and stops providing the cloud resource for the tenant when the idle resources are insufficient. This improves utilization efficiency of the idle resources, and avoids a waste of the cloud resource.

In a possible implementation of the second aspect, the stable cloud resource type is any one of a pay-per-use billing type, a yearly/monthly billing type, and a reserved instance type.

Based on the foregoing method, there are a plurality of stable cloud resource types purchased by the tenant, which can meet different usage requirements of the tenant for the stable cloud resource type.

In a possible implementation of the second aspect, the unstable cloud resource type is a spot pricing billing type or a spot block billing type.

Based on the foregoing method, there are a plurality of unstable cloud resource types purchased by the tenant, which can meet different usage requirements of the tenant for the unstable cloud resource type.

In a possible implementation of the second aspect, the cloud resource is any one of a computing resource, a network resource, or a storage resource.

Based on the foregoing method, there are a plurality of types of cloud resources purchased by the tenant. This ensures flexibility of using different cloud resources by the tenant for different service scenarios.

According to a third aspect, this application provides a cloud management platform. The cloud management platform is configured to manage an infrastructure that provides a public cloud service, the infrastructure includes a plurality of cloud data centers disposed in different regions, and at least one cloud data center is disposed in each region. The cloud management platform includes: a cloud resource configuration interface provision module, a cloud resource creation module, a cloud resource conversion interface provision module, a cloud resource type conversion module, a cloud resource type conversion times counting module, and a cloud resource type conversion ratio calculation module. The cloud resource configuration interface provision module is configured to provide a cloud resource configuration interface, where the cloud resource configuration interface is configured to receive cloud resource configuration information input by a tenant, the cloud resource configuration information includes a specification and a type attribute of a to-be-created cloud resource, and the type attribute indicates that the cloud resource is a stable cloud resource type. The cloud resource creation module is configured to create, in the infrastructure based on the cloud resource configuration information, a cloud resource that has the specification and the type attribute and that is used by the tenant. The cloud resource conversion interface provision module is configured to provide a cloud resource type conversion interface, where the cloud resource type conversion interface is configured to receive a first cloud resource type conversion policy input by the tenant, and the first cloud resource type conversion policy indicates to convert the type attribute of the cloud resource from the stable cloud resource type to an unstable cloud resource type. The cloud resource type conversion module is configured to: convert the type attribute of the cloud resource from the stable cloud resource type to the unstable cloud resource type, perform billing on use of the cloud resource in a preferential manner, and stop providing the cloud resource for the tenant when the tenant does not actively release the cloud resource and idle resources are insufficient.

Any one of the third aspect or the implementations of the third aspect is an apparatus implementation corresponding to any one of the first aspect or the implementations of the first aspect. Descriptions in any one of the first aspect or the implementations of the first aspect are applicable to any one of the second aspect or the implementations of the second aspect. Details are not described herein again.

According to a fourth aspect, this application provides another cloud management platform. The cloud management platform is configured to manage an infrastructure that provides a public cloud service, the infrastructure includes a plurality of cloud data centers disposed in different regions, and at least one cloud data center is disposed in each region. The cloud management platform includes: a cloud resource configuration interface provision module, a cloud resource creation module, a cloud resource conversion interface provision module, a cloud resource type conversion module, a cloud resource type conversion times counting module, and a cloud resource type conversion ratio calculation module. The cloud resource configuration interface provision module is configured to provide a cloud resource configuration interface, where the cloud resource configuration interface is configured to receive cloud resource configuration information input by a tenant, the cloud resource configuration information includes a specification and a type attribute of a to-be-created cloud resource, and the type attribute indicates that the cloud resource is an unstable cloud resource type. The cloud resource creation module is configured to create, in the infrastructure based on the cloud resource configuration information, a cloud resource that has the specification and the type attribute and that is used by the tenant. The cloud resource conversion interface provision module is configured to provide a cloud resource type conversion interface, where the cloud resource type conversion interface is configured to receive a first cloud resource type conversion policy input by the tenant, and the first cloud resource type conversion policy indicates to convert the type attribute of the cloud resource from the unstable cloud resource type to a stable cloud resource type. The cloud resource type conversion module is configured to: convert the type attribute of the cloud resource from the unstable cloud resource type to the stable cloud resource type, perform billing on use of the cloud resource in a non-preferential manner, and keep providing the cloud resource for the tenant when the tenant does not actively release the cloud resource and idle resources are insufficient.

Any one of the fourth aspect or the implementations of the fourth aspect is an apparatus implementation corresponding to any one of the second aspect or the implementations of the second aspect. Descriptions in any one of the second aspect or the implementations of the second aspect are applicable to any one of the fourth aspect or the implementations of the fourth aspect. Details are not described herein again.

According to a fifth aspect, this application provides a computing device cluster, including at least one computing device, where each computing device includes a processor and a memory. The processor of the at least one computing device is configured to execute instructions stored in the memory of the at least one computing device, so that the computing device cluster performs the method disclosed in any one of the first aspect or the possible implementations of the first aspect.

According to a sixth aspect, this application provides a computer program product including instructions. When the instructions are run by a computing device cluster, the computing device cluster is enabled to perform the method disclosed in any one of the first aspect or the possible implementations of the first aspect.

According to a seventh aspect, this application provides a computer-readable storage medium, including computer program instructions. When the computer program instructions are executed by a computing device cluster, the computing device cluster is enabled to perform the method disclosed in any one of the first aspect or the possible implementations of the first aspect.

## BRIEF DESCRIPTION OF DRAWINGS

FIG. 1 is a diagram of a system architecture of a public cloud-based cloud resource conversion method according to an embodiment of the present invention;

FIG. 2 is a flowchart of a public cloud-based cloud resource conversion method according to an embodiment of the present invention;

FIG. 3 is another flowchart of a public cloud-based cloud resource conversion method according to an embodiment of the present invention;

FIG. 4 is a diagram of an internal structure of a cloud management platform according to an embodiment of the present invention;

FIG. 5 is a diagram of a structure of a computing device of a public cloud-based cloud resource conversion method according to an embodiment of the present invention; and

FIG. 6 is a diagram of a structure of a computing device cluster of a public cloud-based cloud resource conversion method according to an embodiment of the present invention.

## DESCRIPTION OF EMBODIMENTS

The following describes the technical solutions in embodiments of the present invention with reference to the accompanying drawings in embodiments of the present invention. It is clear that the described embodiments are merely a part rather than all of embodiments of the present invention. All other embodiments obtained by persons of ordinary skill in the art based on embodiments of the present invention without creative efforts shall fall within the protection scope of the present invention.

To facilitate understanding of embodiments of this application, some terms in this application are first explained and described.

Cloud management platform: The cloud management platform is configured to manage a plurality of cloud data centers that are disposed by a cloud vendor in different regions. The cloud management platform may provide an interface related to a public cloud service, such as a page or an application programing interface (Application Programing Interface, API), for a tenant to remotely access the public cloud service. The tenant may log in to the cloud management platform on a public cloud access page by using a pre-registered account and password, and after successful login, select and purchase a public cloud service, for example, a computing service, a storage service, or a network service, provided by a cloud data center in a region selected by the tenant on the public cloud access page. The computing service provides a computing resource in an infrastructure for the tenant, the storage service provides a storage resource in the infrastructure for the tenant, and the network service provides a network resource in the infrastructure for the tenant.

Reserved billing is a mode in which a cloud resource is purchased by paying a part of fees in advance. A tenant needs to pay a part or all of the fees before using the cloud resource on demand. Compared with a pay-per-use billing mode, reserved implementation can provide a discount.

Spot block billing: In this billing mode, a tenant needs to select an assurance periodicity.

A price varies with the assurance periodicity. The assurance periodicity is minimum unit time for purchasing a spot block instance. If the spot block instance is interrupted by a cloud platform in the assurance periodicity, a current periodicity is not billed. If a user deletes the spot block instance in the assurance periodicity, a current periodicity is billed based on usage duration.

Elastic IP: An elastic IP (Elastic IP) provides an independent public IP cloud resource, including a public IP address and a public ingress and egress bandwidth service.

Virtual machine: A virtual machine (Virtual Machine, VM) is a complete computer system that is simulated by using software, has functions of a complete hardware system, and runs in an entirely isolated environment.

Container: A container uses namespace namespace and cgroup technologies supported by a Linux kernel to isolate application APP processes and their dependency packages (running environments bins/libs, which are specifically all files required for running the APP) in an independent running environment.

An embodiment of the present invention provides a public cloud-based cloud resource conversion method. The method is applied to a cloud management platform, the cloud management platform is configured to manage an infrastructure that provides a public cloud service, the infrastructure includes a plurality of cloud data centers disposed in different regions, and at least one cloud data center is disposed in each region. The method includes the following steps.

The cloud management platform provides a cloud resource configuration interface, and receives, from the cloud resource configuration interface, cloud resource configuration information input by a tenant, where the cloud resource configuration information includes a specification and a type attribute of a to-be-created cloud resource, and the type attribute indicates that the cloud resource is a stable cloud resource type.

The cloud management platform creates, in the infrastructure based on the cloud resource configuration information, a cloud resource that has the specification and the type attribute and that is used by the tenant.

The cloud management platform receives, from a cloud resource type conversion interface, a first cloud resource type conversion policy input by the tenant, where the first cloud resource type conversion policy indicates to convert the type attribute of the cloud resource from the stable cloud resource type to an unstable cloud resource type.

The cloud management platform converts the type attribute of the cloud resource from the stable cloud resource type to the unstable cloud resource type, performs billing on use of the cloud resource in a preferential manner, and stops providing the cloud resource for the tenant when the tenant does not actively release the cloud resource and idle resources are insufficient.

An embodiment of the present invention provides another public cloud-based cloud resource conversion method. The method is applied to a cloud management platform, the cloud management platform is configured to manage an infrastructure that provides a public cloud service, the infrastructure includes a plurality of cloud data centers disposed in different regions, and at least one cloud data center is disposed in each region. The method includes the following steps.

The cloud management platform provides a cloud resource configuration interface, and receives, from the cloud resource configuration interface, cloud resource configuration information input by a tenant, where the cloud resource configuration information includes a specification and a type attribute of a to-be-created cloud resource, and the type attribute indicates that the cloud resource is an unstable cloud resource type.

The cloud management platform creates, in the infrastructure based on the cloud resource configuration information, a cloud resource that belongs to the tenant and has the specification and the type attribute.

The cloud management platform provides a cloud resource type conversion interface, and receives, from the cloud resource type conversion interface, a first cloud resource type conversion policy input by the tenant, where the first cloud resource type conversion policy indicates to convert the type attribute of the cloud resource from a unstable cloud resource type to the stable cloud resource type.

The cloud management platform converts the type attribute of the cloud resource from the unstable cloud resource type to the stable cloud resource type, performs billing on use of the cloud resource in a non-preferential manner, and keeps providing the cloud resource for the tenant when the tenant does not actively release the cloud resource and idle resources are insufficient.

Based on the foregoing method, the tenant may create, through the cloud resource configuration interface provided by the cloud management platform, a cloud resource whose specification and type attribute meet a service requirement of the tenant. The tenant may further switch a type attribute of a purchased cloud resource through the cloud resource type conversion interface provided by the cloud management platform, improving flexibility of using the cloud resource by the tenant and reducing purchase costs of the cloud resource.

The following further describes the foregoing solution clearly. It should be noted that the following specific embodiments are specific implementations based on an overall idea of the foregoing solution.

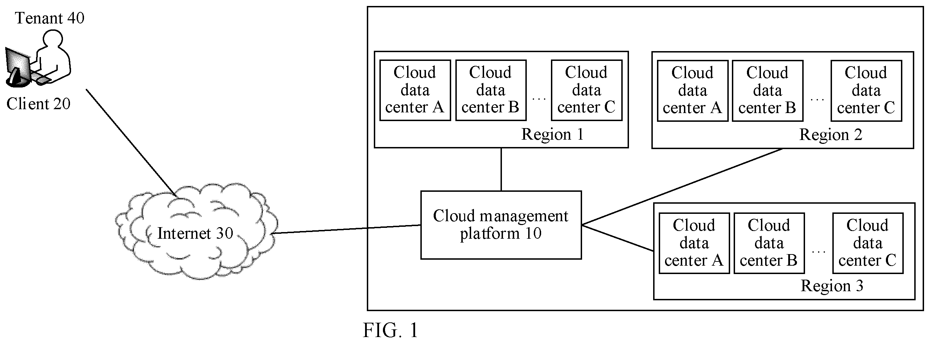

FIG. 1 is a diagram of a system architecture of a public cloud-based cloud resource conversion method according to an embodiment of the present invention. In the embodiment shown in FIG. 1, a tenant 40 accesses a cloud management platform 10 by using a client 20 over an internet 30. The cloud management platform 10 is configured to manage an infrastructure that provides a public cloud service. The infrastructure includes a plurality of regions: a region 1, a region 2, ..., and a region N. Each region has a plurality of cloud data centers: a cloud data center A, a cloud data center B, ..., and a cloud data center C. Cloud resources purchased by the tenant 40 by using the cloud management platform 10 based on a requirement of the tenant 40 run on a plurality of cloud data centers in different regions.

It should be noted that the cloud resources purchased by the tenant 40 include but are not limited to a computing resource, a network resource, and a storage resource. The computing resource is, for example, a virtual machine, a container, or a cloud database. The storage resource is, for example, an object storage bucket or an EVS disk. The network resource is, for example, an elastic IP bandwidth, a load balancer, or a cloud gateway. Therefore, the cloud resources described in this embodiment of this application may be resources provided by a cloud vendor for the tenant for use by charging. The cloud resources may be distributed or independently disposed in at least one server of at least one cloud data center in the plurality of cloud data centers. After logging in to the cloud management platform 10 and paying for the cloud resources, the tenant may access the cloud resources by using the cloud management platform 10. In some cases, the tenant may alternatively directly log in to the cloud resources.

The following specifically describes a public cloud-based cloud resource conversion method implemented based on the foregoing system architecture in embodiments of the present invention. For details, refer to the following.

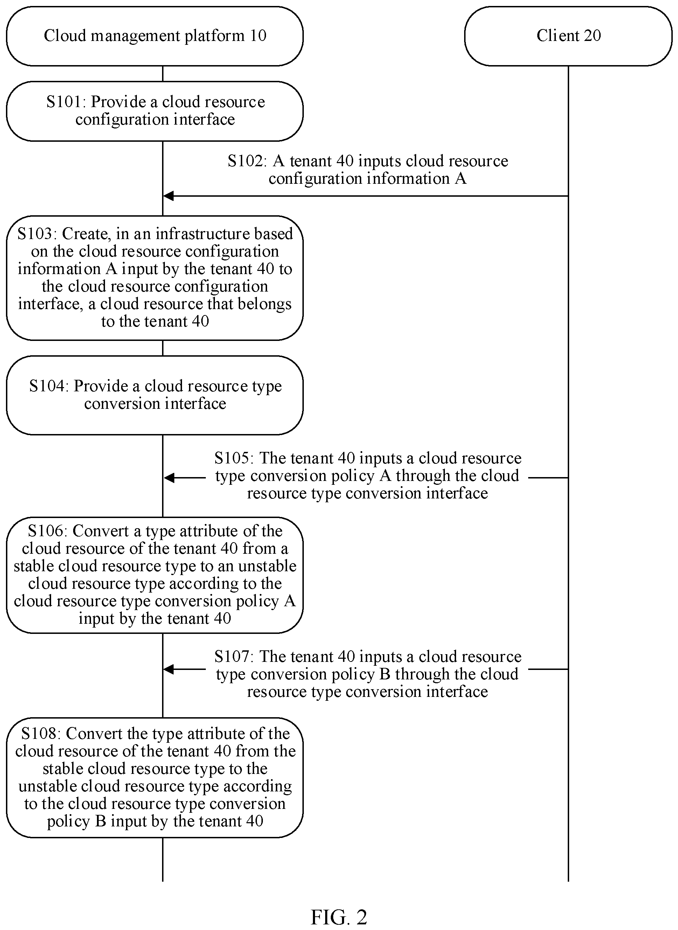

FIG. 2 is a flowchart of a public cloud-based cloud resource conversion method according to an embodiment of the present invention. The method includes the following steps.

S101: A cloud management platform 10 provides a cloud resource configuration interface for a tenant 40.

The tenant 40 logs in to the cloud management platform 10 by using a client 20, and the cloud management platform 10 provides the cloud resource configuration interface for the tenant. The cloud resource configuration interface is configured to receive cloud resource configuration information A input by the tenant 40, and the cloud resource configuration interface may be, for example, an application programing interface API or a configuration page.

S102: The tenant 40 inputs the cloud resource configuration information A to the cloud resource configuration interface.

For example, the tenant 40 registers a dedicated account on the cloud management platform 10 by using the client 20, and then may log in to the cloud management platform 10 by logging in to the account. The tenant 40 may purchase a cloud resource on the cloud management platform 10. The cloud management platform 10 obtains the cloud resource configuration information A from the cloud resource configuration interface. The cloud resource configuration information A indicates a specification and a type attribute of a to-be-created cloud resource, and the type attribute includes a stable cloud resource type and an unstable cloud resource type. The stable cloud resource type is, for example, any one of a pay-per-use billing type, a yearly/monthly billing type, and a reserved instance type, and the unstable cloud resource type is, for example, a spot pricing billing type or a spot block billing type.

The specification that is included in the cloud resource configuration information A and that indicates the to-be-created cloud resource includes the following information: The specification is c7.large.2, there are two virtual processors vCPUs of the specification, that is, 2vCPUs, an internal memory is 4GiB, a maximum bandwidth is 4 Gbit/s, and the type attribute is the stable cloud resource type (for example, the pay-per-use billing type).

S103: The cloud management platform 10 creates, in the infrastructure based on the cloud resource configuration information A that is input by the tenant 40 to the cloud resource configuration interface, a cloud resource that belongs to the tenant 40.

Optionally, the cloud resource configuration information A input by the tenant 40 further includes a region selected by the tenant for the to-be-created cloud resource.

Optionally, if cloud data center information in the region selected by the tenant 40 is randomly allocated, the cloud management platform 10 sets a proper region for the cloud resource of the tenant 40 based on an idle resource in each region.

It should be noted that the tenant 40 may set the type attribute of the cloud resource to the stable cloud resource type in the following manner:

The tenant 40 directly selects, from the cloud resource configuration information A, any one of the pay-per-use billing type, the yearly/monthly billing type, and the reserved instance type that belong to the stable cloud resource type as a billing mode.

Alternatively, the tenant 40 may set the type attribute of the cloud resource by labeling the created cloud resource. For example, if an important label is attached to the cloud resource, the type attribute of the cloud resource with the important label belongs to the stable cloud resource type, or a label of the stable cloud resource type is directly attached to the cloud resource. This is not limited in this embodiment of the present invention.

After creating the cloud resource whose type attribute is stable for the tenant 40 based on the cloud resource configuration information A input by the tenant 40, the cloud management platform 10 performs billing on use of the stable cloud resource in a non-preferential manner, and keeps providing the stable cloud resource for the tenant when the tenant does not actively release the cloud resource and idle resources are insufficient. When the tenant 40 analyzes that a service scenario of the tenant 40 meets a condition that the service scenario is continuous and cannot be randomly interrupted, the tenant 40 may choose to purchase a stable cloud resource for the service. The stable cloud resource is billed based on a market price, and continuously provides a cloud service for the tenant 40.

The non-preferential manner is, for example, a billing manner based on the market price, and no discount or reward is provided based on the market price.

A preferential manner is, for example, a billing manner that is lower than the market price, and a discount is provided based on the market price, or a redeemable bonus point or a cloud service is rewarded, where the redeemable bonus point can offset a fee.

It should be noted that, in a cloud scenario, a market value is determined by a cloud vendor based on costs related to the cloud resource. The costs include, for example, a server purchase fee, a server operations and maintenance fee, a related water and electricity fee, and a data center purchase/lease fee.

S104: The cloud management platform 10 provides a cloud resource type conversion interface for the tenant 40.

The cloud resource type conversion interface is configured to receive a cloud resource type conversion policy A input by the tenant 40, and the cloud resource type conversion interface may be, for example, an application programing interface API or a configuration page.

S105: The tenant 40 inputs the cloud resource type conversion policy A to the cloud management platform 10 through the cloud resource type conversion interface.

The cloud management platform 10 obtains, from the cloud resource type conversion interface, the cloud resource type conversion policy A input by the tenant 40. When a service requirement of the tenant 40 changes, the tenant 40 may choose to switch a type attribute of a purchased cloud resource. The cloud resource type conversion policy A indicates to convert the type attribute of the cloud resource from the stable cloud resource type to the unstable cloud resource type.

S106: The cloud management platform 10 converts the type attribute of the cloud resource of the tenant 40 from the stable cloud resource type to the unstable cloud resource type according to the cloud resource type conversion policy A input by the tenant 40.

When determining that the cloud resource does not need to be continuously and stably provided for the tenant 40 for use, the tenant 40 switches the resource attribute of the cloud resource by invoking the cloud resource type conversion interface, so that the cloud resource is switched to the unstable cloud resource type. In this case, the cloud management platform performs billing on use of the cloud resource in the preferential manner, and stops providing the cloud resource for the tenant 40 when the tenant 40 does not actively release the cloud resource and the idle resources are insufficient.

S107: The tenant 40 inputs a cloud resource type conversion policy B to the cloud management platform 10 through the cloud resource type conversion interface.

The cloud management platform 10 obtains, from the cloud resource type conversion interface, the cloud resource type conversion policy B input by the tenant 40. When a service requirement of the tenant 40 changes again, the tenant 40 may choose to switch a type attribute of a converted cloud resource. The cloud resource type conversion policy B indicates to convert the type attribute of the cloud resource from the unstable cloud resource type to the stable cloud resource type.

S108: The cloud management platform 10 converts the type attribute of the cloud resource of the tenant 40 from the unstable cloud resource type to the stable cloud resource type according to the cloud resource type conversion policy B input by the tenant 40.

When considering that the cloud resource needs to be continuously and stably provided for the tenant 40 for use, the tenant 40 switches the resource attribute of the cloud resource by invoking the cloud resource type conversion interface again, so that the cloud resource is switched to the stable cloud resource type again. In this case, the cloud management platform performs billing on use of the cloud resource in the non-preferential manner, and keeps providing the cloud resource for the tenant 40 when the tenant 40 does not actively release the cloud resource and the idle resources are insufficient.

Optionally, after the cloud management platform 10 receives a cloud resource type conversion policy that is input by the tenant 40 and that is for converting the stable cloud resource type to the unstable cloud resource type, the cloud management platform 10 calculates a type attribute conversion ratio of the cloud resource. When the type attribute conversion ratio of the cloud resource does not exceed a threshold, the cloud management platform 10 converts all types of cloud resources that need to be converted by the tenant 40 from the stable cloud resource type to the unstable cloud resource type, performs billing on use of the unstable cloud resource type in the preferential manner, and stops providing the cloud resource for the tenant 40 when the tenant 40 does not actively release the cloud resource and the idle resources are insufficient.

It should be noted that the preferential manner mentioned above may be full-process or segment-based billing in a discount manner, or may be full-process billing in a non-discount manner, and a specific quantity of coupons or bonus points are returned to the tenant 40 based on usage time or a usage amount of an unstable cloud resource. The coupons or bonus points may be used to deduct a specific fee or cloud resource when the tenant 40 purchases the cloud resource. In another embodiment, there may be another preferential manner, and the preferential manner is not limited herein.

In addition, when the tenant 40 analyzes that a service scenario of the tenant 40 meets a condition that the service scenario is not continuous and can be randomly interrupted, the tenant 40 needs to switch the stable cloud resource type to the unstable cloud resource type to adapt to a change of the service scenario of the tenant 40. Because the unstable cloud resource type is an idle resource type that fluctuates at any time, and faces a risk of being released when the idle resources are insufficient, the tenant 40 needs to back up, in a timely manner, data that uses the unstable cloud resource.

In addition, when the type attribute conversion ratio of the cloud resource exceeds the threshold, the cloud management platform 10 prompts, for the type attribute of the cloud resource of the tenant 40, that conversion is forbidden or the tenant 40 is charged. The threshold of the type attribute conversion ratio of the cloud resource may be calculated by using data of the idle resource:

$$Count_{max} = Max(Ceil\left(Used_{user} * \left(\frac{Available_{pool}}{Total_{pool}} * Threshold\right)\right), Count_{min}) \quad (1)$$

In formula (1), $Count_{max}$ is the threshold of the type attribute conversion ratio of the cloud resource, $Used_{user}$ is a quantity of cloud resources used by the tenant (types before conversion), $Available_{pool}$ is a quantity of available idle resources, $Total_{pool}$ is a total quantity of cloud resource pools, Threshold is a conversion threshold, and $Count_{min}$ is a minimum quantity of type attributes of cloud resources that can be converted by each tenant.

$$Count_{available} = Count_{max} - Count_{changed} \quad (2)$$

In formula (2), $Count_{available}$ is a quantity of type attributes of cloud resources that can be converted by the tenant, and $Count_{changed}$ is a quantity of type attributes of cloud resources that have been converted by the tenant.

When a value of $Count_{available}$ is less than a quantity of type attributes of cloud resources that the tenant 40 requests to convert, the cloud management platform 10 prompts the tenant 40 that conversion of the type attribute of the cloud resource fails, or sends a cloud resource type attribute conversion bill to the tenant 40 for confirmation.

It should be noted that, in another embodiment, the threshold of the type attribute conversion ratio of the cloud resource may alternatively be obtained through calculation based on other factors such as a level of the tenant 40, a service type of the tenant 40, and historical data of the conversion ratio of the cloud resource of the tenant 40. A manner of calculating the threshold of the type attribute conversion ratio of the cloud resource is not limited herein.

Optionally, after the cloud management platform 10 receives the cloud resource type conversion policy that is input by the tenant 40 and that is for converting the stable cloud resource type to the unstable cloud resource type, the cloud management platform 10 counts type attribute conversion times of the cloud resource. When the type attribute conversion times of the cloud resource do not exceed a threshold, the cloud management platform 10 converts all types of cloud resources that need to be converted by the tenant 40 from the stable cloud resource type to the unstable cloud resource type. Specifically, the cloud management platform 10 may convert, based on label information set by the tenant 40 for a cloud resource type, a cloud resource labeled as important (that is, a stable cloud resource) to an unstable cloud resource, and cancel important label information of the cloud resource.

In addition, when the type attribute conversion times of the cloud resource exceed the threshold, the cloud management platform 10 prompts the tenant 40 that conversion of the type attribute of the cloud resource fails, or sends a cloud resource type attribute conversion bill to the tenant 40 for confirmation.

It should be noted that the threshold of the type attribute conversion times of the cloud resource herein may be set by the tenant 40 when the tenant 40 purchases the cloud resource or set by a system, or may be obtained through calculation based on other factors such as the level of the tenant 40, the service type of the tenant 40, and the historical data of the conversion ratio of the cloud resource of the tenant 40. A manner of calculating the threshold of the type attribute conversion times of the cloud resource is not limited herein.

The foregoing embodiment describes a process of converting the stable cloud resource type to the unstable cloud resource type. It should be understood that, in this embodiment of the present invention, a process of converting the unstable cloud resource type to the stable cloud resource type may also be implemented. Further, in this embodiment of the present invention, dynamic conversion of stable-unstable-stable-unstable... may also be implemented. The tenant 40 may configure, based on a service requirement of the tenant 40, a configuration that implements dynamic conversion through the cloud resource configuration interface, which is not described in detail in this embodiment of the present invention.

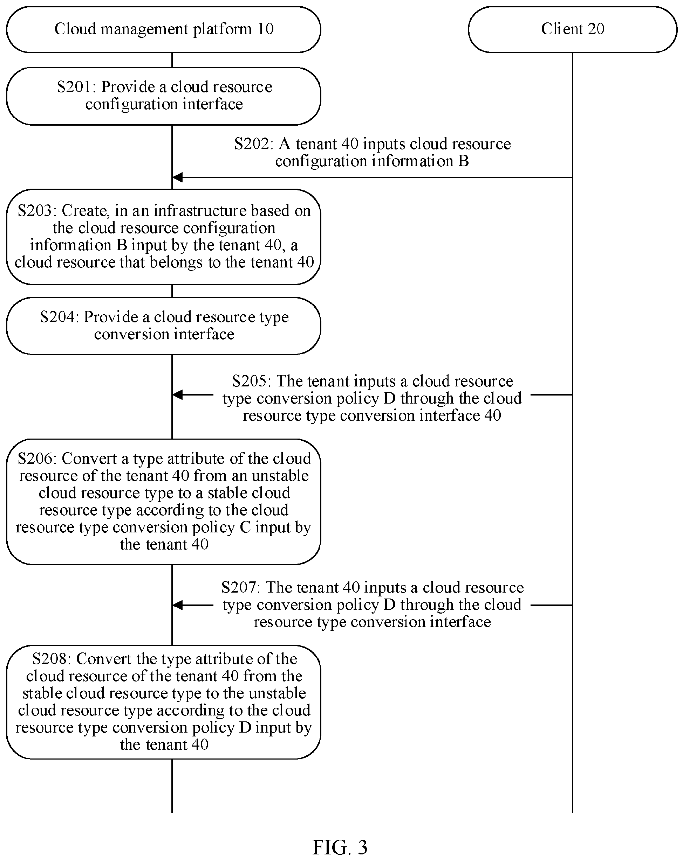

FIG. 3 is another flowchart of a public cloud-based cloud resource conversion method according to an embodiment of the present invention. FIG. 3 shows a method for converting an unstable cloud resource type to a stable cloud resource type. The method includes the following steps.

S201: A cloud management platform 10 provides a cloud resource configuration interface for a tenant 40.

S202: The tenant 40 inputs cloud resource configuration information B.

For specific implementations of steps S201 and S202, refer to descriptions of steps S101 and S102 in FIG. 2. Details are not described herein again.

S203: The cloud management platform 10 creates, in an infrastructure based on the cloud resource configuration information B input by the tenant 40, a cloud resource that belongs to the tenant 40.

Optionally, the cloud resource configuration information B input by the tenant 40 further includes a region selected by the tenant for the to-be-created cloud resource.

Optionally, if cloud data center information in the region selected by the tenant 40 is randomly allocated, the cloud management platform 10 sets a proper region for the cloud resource of the tenant 40 based on an idle resource in each region.

It should be noted that the tenant 40 may set a type attribute of the cloud resource to the unstable cloud resource type in the following manner:

The tenant 40 directly selects, from the cloud resource configuration information B, a spot pricing billing type or a spot block billing type that belongs to the unstable cloud resource type as a billing mode.

Alternatively, the tenant 40 may set the type attribute of the cloud resource by labeling the created cloud resource. For example, if an important label is attached to the cloud resource, a type attribute of a cloud resource without an important label is the unstable cloud resource type, or a label of the unstable cloud resource type is directly attached to the cloud resource. This is not limited in this embodiment of the present invention.

After creating a cloud resource whose type attribute is unstable for the tenant 40 based on the cloud resource configuration information B input by the tenant 40, the cloud management platform 10 performs billing on use of the unstable cloud resource in a preferential manner, and stops providing the cloud resource for the tenant when the tenant does not actively release the cloud resource and idle resources are insufficient. When the tenant 40 analyzes that a service scenario of the tenant 40 meets a condition that the service scenario is not continuous and can be randomly interrupted, the tenant 40 may choose to purchase an unstable cloud resource for the service. Because the unstable cloud resource is an idle resource that fluctuates at any time, and faces a risk of being released when the idle resources are insufficient, the tenant 40 needs to back up, in a timely manner, data that uses the unstable cloud resource.

The preferential manner is, for example, a billing manner that is lower than a market price, and a discount is provided based on the market price, or a redeemable bonus point or a cloud service is rewarded, where the redeemable bonus point can offset a fee.

A non-preferential manner is, for example, a billing manner based on the market price, and no discount or reward is provided based on the market price.

It should be noted that, in a cloud scenario, a market value is determined by a cloud vendor based on costs related to the cloud resource. The costs include, for example, a server purchase fee, a server operations and maintenance fee, a related water and electricity fee, and a data center purchase/lease fee.

S204: The cloud management platform 10 provides a cloud resource type conversion interface for the tenant 40.

For a specific implementation of step S204, refer to descriptions of step S104 in FIG. 2. Details are not described herein again.

S205: The tenant 40 inputs a cloud resource type conversion policy C to the cloud management platform 10 through the cloud resource type conversion interface.

The cloud management platform 10 obtains, from the cloud resource type conversion interface, the cloud resource type conversion policy C input by the tenant 40. When a service requirement of the tenant 40 changes, the tenant 40 may choose to switch a type attribute of a purchased cloud resource. The cloud resource type conversion policy C indicates to convert the type attribute of the cloud resource from the unstable cloud resource type to the stable cloud resource type.

S206: The cloud management platform 10 converts the type attribute of the cloud resource of the tenant 40 from the unstable cloud resource type to the stable cloud resource type according to the cloud resource type conversion policy C input by the tenant 40.

When considering that the cloud resource needs to be continuously and stably provided for the tenant 40 for use, the tenant 40 switches the resource attribute of the cloud resource by invoking the cloud resource type conversion interface again, so that the cloud resource is switched to the stable cloud resource type again. In this case, the cloud management platform performs billing on use of the cloud resource in the non-preferential manner, and keeps providing the cloud resource for the tenant 40 when the tenant 40 does not actively release the cloud resource and the idle resources are insufficient.

S207: The tenant 40 inputs a cloud resource type conversion policy D to the cloud management platform 10 through the cloud resource type conversion interface.

The cloud management platform 10 obtains, from the cloud resource type conversion interface, the cloud resource type conversion policy D input by the tenant 40. When a service requirement of the tenant 40 changes again, the tenant 40 may choose to switch a type attribute of a converted cloud resource. The cloud resource type conversion policy D indicates to convert the type attribute of the cloud resource from the stable cloud resource type to the unstable cloud resource type.

S208: The cloud management platform 10 converts the type attribute of the cloud resource of the tenant 40 from the stable cloud resource type to the unstable cloud resource type according to the cloud resource type conversion policy D input by the tenant 40.

When determining that the cloud resource does not need to be continuously and stably provided for the tenant 40 for use, the tenant 40 switches the resource attribute of the cloud resource by invoking the cloud resource type conversion interface, so that the cloud resource is switched to the unstable cloud resource type. In this case, the cloud management platform performs billing on use of the cloud resource in the preferential manner, and stops providing the cloud resource for the tenant 40 when the tenant 40 does not actively release the cloud resource and the idle resources are insufficient.

Optionally, after the cloud management platform 10 receives a cloud resource type conversion policy that is input by the tenant 40 and that is for converting the unstable cloud resource type to the stable cloud resource type, the cloud management platform 10 calculates a type attribute conversion ratio of the cloud resource. When the type attribute conversion ratio of the cloud resource does not exceed a threshold, the cloud management platform 10 converts all types of cloud resources that need to be converted by the tenant 40 from the unstable cloud resource type to the stable cloud resource type, performs billing on use of a stable cloud resource in the non-preferential manner, and keeps providing the cloud resource for the tenant when the tenant does not actively release the cloud resource and the idle resources are insufficient.

In addition, when the tenant 40 analyzes that a service scenario of the tenant 40 meets a condition that the service scenario is continuous and cannot be randomly interrupted, the tenant 40 needs to switch an unstable resource to a stable cloud resource to adapt to a change of the service scenario of the tenant 40. The stable cloud resource is normally billed based on a market price, and continuously provides a cloud service for the tenant 40.

In addition, when the type attribute conversion ratio of the cloud resource exceeds the threshold, the cloud management platform 10 prompts, for the type attribute of the cloud resource of the tenant 40, that conversion is forbidden or the tenant 40 is charged. The threshold of the type attribute conversion ratio of the cloud resource may be calculated by using data of the idle resource:

$$Count_{max} = Max\left(Ceil\left(Used_{user} * \left(\frac{Available_{pool}}{Total_{pool}} * Theshold\right)\right), Count_{min}\right) \quad (1)$$

In formula (1), $Count_{max}$ is the threshold of the type attribute conversion ratio of the cloud resource, $Used_{user}$ is a quantity of cloud resources used by the tenant (types before conversion), $Available_{pool}$ is a quantity of available idle resources, $Total_{pool}$ is a total quantity of cloud resource pools, Theshold is a conversion threshold, and $Count_{min}$ is a minimum quantity of type attributes of cloud resources that can be converted by each tenant.

$$Count_{available} = Count_{max} - Count_{changed} \ \underline{(2)}$$

In formula (2), $Count_{available}$ is a quantity of type attributes of cloud resources that can be converted by the tenant, and $Count_{changed}$ is a quantity of type attributes of cloud resources that have been converted by the tenant.

When a value of $Count_{available}$ is less than a quantity of type attributes of cloud resources that the tenant 40 requests to convert, the cloud management platform 10 prompts the tenant 40 that conversion of the type attribute of the cloud resource fails, or sends a cloud resource type attribute conversion bill to the tenant 40 for confirmation.

It should be noted that, in another embodiment, the threshold of the type attribute conversion ratio of the cloud resource may alternatively be obtained through calculation based on other factors such as a level of the tenant 40, a service type of the tenant 40, and historical data of the conversion ratio of the cloud resource of the tenant 40. A manner of calculating the threshold of the type attribute conversion ratio of the cloud resource is not limited herein.

The cloud management platform 10 counts type attribute conversion times of the cloud resource. When the type attribute conversion times of the cloud resource do not exceed a threshold, the cloud management platform 10 converts all types of cloud resources that need to be converted by the tenant 40 from the unstable cloud resource type to the stable cloud resource type. Specifically, the cloud management platform 10 may convert, based on label information set by the tenant 40 for a cloud resource type, a cloud resource that is not labeled as important (that is, an unstable cloud resource) to a stable cloud resource, and add label information indicating that the cloud resource is important.

In addition, when the type attribute conversion times of the cloud resource exceed the threshold, the cloud management platform 10 prompts the tenant 40 that conversion of the type attribute of the cloud resource fails, or sends a cloud resource type attribute conversion bill to the tenant 40 for confirmation.

It should be noted that the threshold of the type attribute conversion times of the cloud resource herein may be set by the tenant 40 when the tenant 40 purchases the cloud resource or set by a system, or may be obtained through calculation based on other factors such as the level of the tenant 40, the service type of the tenant 40, and the historical data of the conversion ratio of the cloud resource of the tenant 40. A manner of calculating the threshold of the type attribute conversion times of the cloud resource is not limited herein.

In the foregoing embodiment, the tenant may create, through the cloud resource configuration interface provided by the cloud management platform, a cloud resource whose specification and type attribute meet a service requirement of the tenant. The tenant may further switch a type attribute of a purchased cloud resource based on a change of a service of the tenant through the cloud resource type conversion interface provided by the cloud management platform, improving flexibility of using the cloud resource by the tenant and reducing purchase costs of the cloud resource.

It should be noted that, in the foregoing embodiment, when the tenant 40 needs to convert a type of the cloud resource from an unstable cloud resource to a stable cloud resource, to ensure service continuity, the cloud management platform 10 gives the tenant 40 specific switching time. Within the switching time, the unstable cloud resource enters a hibernation state, and data of the unstable cloud resource is stored in a storage system. The tenant 40 creates a new stable cloud resource, and synchronizes the data in the unstable cloud resource to the newly created stable cloud resource. After the newly created stable cloud resource can run normally, the unstable cloud resource is released, to prevent the unstable cloud resource of the tenant 40 from being suddenly released, which affects the service of the tenant 40.

According to the foregoing cloud service deployment method based on cloud computing technologies, an embodiment of the present invention further discloses an internal structure of a cloud management platform. For details, refer to the following.

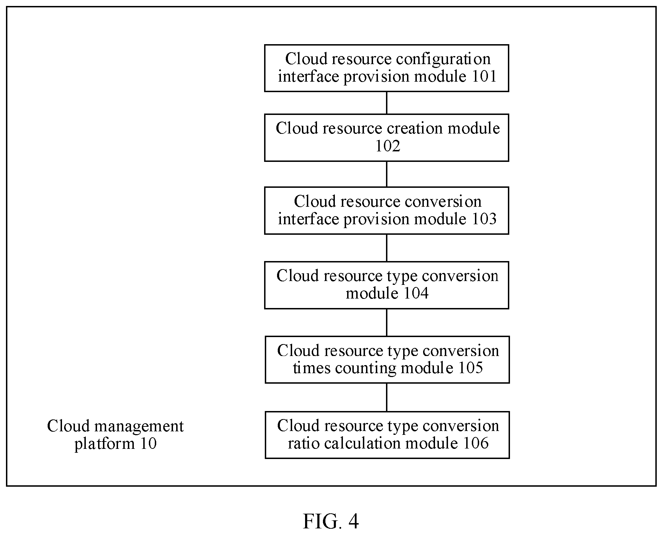

FIG. 4 is a diagram of an internal structure of a cloud management platform according to an embodiment of the present invention. The cloud management platform is configured to manage an infrastructure that provides a public cloud service, where the infrastructure includes a plurality of cloud data centers disposed in different regions, and at least one cloud data center is disposed in each region. The cloud management platform includes: a cloud resource configuration interface provision module 101, a cloud resource creation module 102, a cloud resource conversion interface provision module 103, a cloud resource type conversion module 104, a cloud resource type conversion times counting module 105, and a cloud resource type conversion ratio calculation module 106.

The cloud resource configuration interface provision module 101 is configured to provide a cloud resource configuration interface, where the cloud resource configuration interface is configured to receive cloud resource configuration information input by a tenant, the cloud resource configuration information includes a specification and a type attribute of a to-be-created cloud resource, and the type attribute indicates that the cloud resource is a stable cloud resource type.

The cloud resource creation module 102 is configured to create, in the infrastructure based on the cloud resource configuration information, a cloud resource that has the specification and the type attribute and that is used by the tenant.

The cloud resource conversion interface provision module 103 is configured to provide a cloud resource type conversion interface, where the cloud resource type conversion interface is configured to receive a first cloud resource type conversion policy input by the tenant, and the first cloud resource type conversion policy indicates to convert the type attribute of the cloud resource from the stable cloud resource type to an unstable cloud resource type.

The cloud resource type conversion module 104 is configured to: convert the type attribute of the cloud resource from the stable cloud resource type to the unstable cloud resource type, perform billing on use of the cloud resource in a preferential manner, and stop providing the cloud resource for the tenant when the tenant does not actively release the cloud resource and idle resources are insufficient.

The cloud resource type conversion module 104 is further configured to: convert the type attribute of the cloud resource from the unstable cloud resource type to the stable cloud resource type, perform billing on use of the cloud resource in a non-preferential manner, and keep providing the cloud resource for the tenant when the tenant does not actively release the cloud resource and the idle resources are insufficient.

The cloud resource type conversion module 104 is further configured to: bill, based on the stable cloud resource type indicated by the type attribute, use of the cloud resource in the non-preferential manner, and keep providing the cloud resource for the tenant when the tenant does not actively release the cloud resource and the idle resources are insufficient.

The cloud resource type conversion times counting module 105 is configured to: count type attribute conversion times of the cloud resource, and when the type attribute conversion times of the cloud resource exceed a threshold, forbid performing next conversion, or charge the tenant for the next conversion.

The cloud resource type conversion ratio calculation module 106 is configured to: calculate a type attribute conversion ratio of the cloud resource, and when the type attribute conversion ratio of the cloud resource exceeds a threshold, forbid performing conversion, or charge the tenant.

the cloud resource configuration interface provision module 101 is configured to provide a cloud resource configuration interface, where the cloud resource configuration interface is configured to receive cloud resource configuration information input by a tenant, the cloud resource configuration information indicates a specification and a type attribute of a to-be-created cloud resource, and the type attribute indicates that the cloud resource is an unstable cloud resource type.

The cloud resource creation module 102 is configured to create, in the infrastructure based on the cloud resource configuration information, a cloud resource that has the specification and the type attribute and that is used by the tenant.

The cloud resource conversion interface provision module 103 is configured to provide a cloud resource type conversion interface, where the cloud resource type conversion interface is configured to receive a first cloud resource type conversion policy input by the tenant, and the first cloud resource type conversion policy indicates to convert the type attribute of the cloud resource from the unstable cloud resource type to a stable cloud resource type.

The cloud resource type conversion module 104 is configured to: convert the type attribute of the cloud resource from the unstable cloud resource type to the stable cloud resource type, perform billing on use of the cloud resource in a non-preferential manner, and keep providing the cloud resource for the tenant when the tenant does not actively release the cloud resource and idle resources are insufficient.

The cloud resource type conversion module 104 is further configured to: convert the type attribute of the cloud resource from the stable cloud resource type to the unstable cloud resource type, perform billing on use of the cloud resource in a preferential manner, and stop providing the cloud resource for the tenant when the tenant does not actively release the cloud resource and the idle resources are insufficient.

The cloud resource type conversion module 104 is further configured to: bill, based on the unstable cloud resource type indicated by the type attribute, use of the cloud resource in the preferential manner, and stop providing the cloud resource for the tenant when the tenant does not actively release the cloud resource and the idle resources are insufficient.

The cloud resource type conversion times counting module 105 is configured to: count type attribute conversion times of the cloud resource, and when the type attribute conversion times of the cloud resource exceed a threshold, forbid performing next conversion, or charge the tenant for the next conversion.

The cloud resource type conversion ratio calculation module 106 is configured to: calculate a type attribute conversion ratio of the cloud resource, and when the type attribute conversion ratio of the cloud resource exceeds a threshold, forbid performing conversion, or charge the tenant.

It should be noted that the cloud resource configuration interface provision module 101, the cloud resource creation module 102, the cloud resource conversion interface provision module 103, the cloud resource type conversion module 104, the cloud resource type conversion times counting module 105, and the cloud resource type conversion ratio calculation module 106 may all be implemented by using software, or may be implemented by using hardware. For example, the following uses the cloud resource configuration interface provision module 101 as an example to describe an implementation of an interface providing module 103. Similarly, implementations of the cloud resource configuration interface provision module 101, the cloud resource creation module 102, the cloud resource conversion interface provision module 103, the cloud resource type conversion module 104, the cloud resource type conversion times counting module 105, and the cloud resource type conversion ratio calculation module 106 are as follows.

When implemented by using the software, the cloud resource configuration interface provision module 101 may be an application program or a code block run on a computer device. The computer device may be at least one of computing devices such as a physical host, a virtual machine, and a container. Further, there may be one or more computer devices. For example, the cloud resource configuration interface provision module 101 may be an application program run on a plurality of hosts/virtual machines/containers. It should be noted that the plurality of hosts/virtual machines/containers configured to run the application program may be distributed in a same availability zone (availability zone, AZ), or may be distributed in different AZs. The plurality of hosts/virtual machines/containers configured to run the application program may be distributed in a same region (region) or may be distributed in different regions. Generally, one region may include a plurality of AZs.

Similarly, the plurality of hosts/virtual machines/containers configured to run the application program may be distributed in a same virtual private cloud (virtual private cloud, VPC), or may be distributed in a plurality of VPCs. Generally, one region may include a plurality of VPCs, and one VPC may include a plurality of AZs.

When implemented by using the hardware, the cloud resource configuration interface provision module 101 may include at least one computing device, such as a server. Alternatively, the cloud resource configuration interface provision module 101 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

The plurality of computing devices included in the cloud resource configuration interface provision module 101 may be distributed in a same AZ, or may be distributed in different AZs. The plurality of computing devices included in the cloud resource configuration interface provision module 101 may be distributed in a same region, or may be distributed in different regions. Similarly, the plurality of computing devices included in the cloud resource configuration interface provision module 101 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that any one of the cloud resource configuration interface provision module 101, the cloud resource creation module 102, the cloud resource conversion interface provision module 103, the cloud resource type conversion module 104, the cloud resource type conversion times counting module 105, and the cloud resource type conversion ratio calculation module 106 may be configured to perform some or all steps in a public cloud-based cloud connection service configuration method.

The modules of the cloud management platform disclosed in this embodiment of the present invention have clear division of labor and close cooperation, and the modules cooperate with each other to efficiently complete a service of performance optimization for a cloud service.

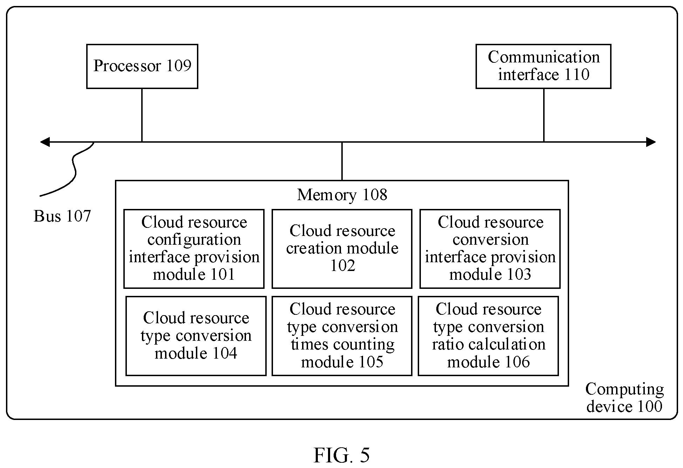

The present invention further provides a computing device. FIG. 5 is a diagram of a structure of a computing device of a public cloud-based cloud resource conversion method according to an embodiment of the present invention. The computing device 100 includes a bus 107, a processor 109, a memory 108, and a communication interface 110. The processor 109, the memory 108, and the communication interface 110 communicate with each other through the bus 107. The computing device 100 may be a server or a terminal device. It should be understood that quantities of processors and memories in the computing device 100 are not limited in this application.

The bus 107 may be a peripheral component interconnect (peripheral component interconnect, PCI) bus, an extended industry standard architecture (extended industry standard architecture, EISA) bus, and or the like. Buses may be classified into an address bus, a data bus, a control bus, and the like. For ease of representation, only one line is used for representation in FIG. 5, but it does not mean that there is only one bus or only one type of bus. The bus 107 may include a path for transmitting information between components (for example, the memory 108, the processor 109, and the communication interface 110) of the computing device 100.

The processor 109 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 108 may include a volatile memory (volatile memory), for example, a random access memory (random access memory, RAM). The processor 109 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 108 stores executable program code. The processor 109 executes the executable program code to respectively implement functions of the cloud resource configuration interface provision module 101, the cloud resource creation module 102, the cloud resource conversion interface provision module 103, the cloud resource type conversion module 104, the cloud resource type conversion times counting module 105, and the cloud resource type conversion ratio calculation module 106, to implement a public cloud-based cloud connection service configuration method. In other words, the memory 108 stores an instruction used by the cloud management platform to perform the public cloud-based cloud connection service configuration method.

The communication interface 110 implements communication between the computing device 100 and another device or a communication network by using a transceiver module, for example, but not limited to a network interface card or a transceiver.

An embodiment of the present invention further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

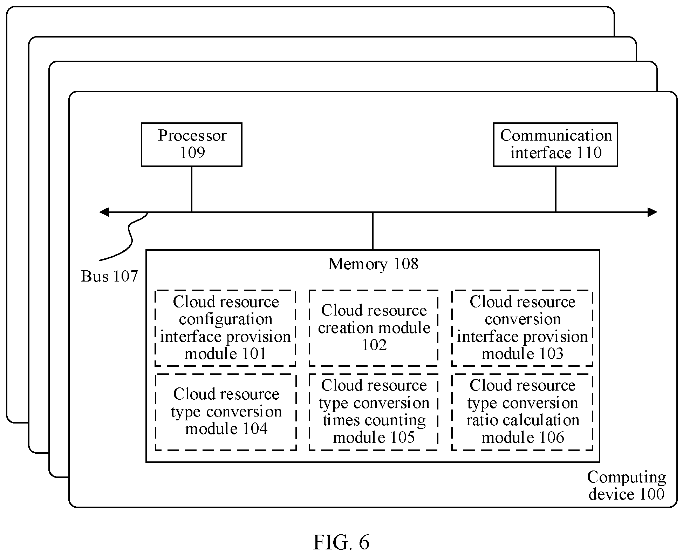

FIG. 6 is a diagram of a structure of a computing device cluster of a public cloud-based cloud resource conversion method according to an embodiment of the present invention. The computing device cluster includes at least one computing device 100. A memory 108 in one or more computing devices 100 in the computing device cluster may store a same instruction used by the cloud management platform to perform a public cloud-based cloud connection service configuration method.

In some possible implementations, the one or more computing devices 100 in the computing device cluster may also be configured to execute some instructions used by the cloud management platform to perform the public cloud-based cloud connection service configuration method. In other words, a combination of one or more computing devices 100 may jointly execute the instruction used by the cloud management platform to perform the public cloud-based cloud connection service configuration method.

It should be noted that memories 108 in different computing devices 100 in the computing device cluster may store different instructions, which are used to perform some functions of the cloud management platform. In other words, instructions stored in the memories 108 in different computing devices 100 may implement functions of one or more of the cloud resource configuration interface provision module 101, the cloud resource creation module 102, the cloud resource conversion interface provision module 103, the cloud resource type conversion module 104, the cloud resource type conversion times counting module 105, and the cloud resource type conversion ratio calculation module 106.

An embodiment of the present invention further provides a computer program product including instructions. The computer program product may be a software or program product that includes the instructions and that can run on a computing device or be stored in any usable medium. When the computer program product runs on at least one computer device, the at least one computer device is enabled to perform the foregoing public cloud-based cloud connection service configuration method that is applied to a cloud management platform.

An embodiment of the present invention further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the foregoing public cloud-based cloud connection service configuration method that is applied to a cloud management platform.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

**Claims**

1. A public cloud-based cloud resource conversion method, wherein the method is applied to a cloud management platform, the cloud management platform is configured to manage an infrastructure that provides a public cloud service, the infrastructure comprises a plurality of cloud data centers disposed in different regions, and at least one cloud data center is disposed in each region; and the method comprises:

   receiving, by the cloud management platform from a cloud resource configuration interface, cloud resource configuration information input by a tenant, wherein the cloud resource configuration information comprises a specification and a type attribute of a to-be-created cloud resource, and the type attribute indicates that the cloud resource is a stable cloud resource type;

creating, by the cloud management platform in the infrastructure based on the cloud resource configuration information, a cloud resource that has the specification and the type attribute and that is used by the tenant;

receiving, by the cloud management platform from a cloud resource type conversion interface, a first cloud resource type conversion policy input by the tenant, wherein the first cloud resource type conversion policy indicates to convert the type attribute of the cloud resource from the stable cloud resource type to an unstable cloud resource type; and

converting, by the cloud management platform, the type attribute of the cloud resource from the stable cloud resource type to the unstable cloud resource type, performing billing on use of the cloud resource in a preferential manner, and stopping providing the cloud resource for the tenant when the tenant does not actively release the cloud resource and idle resources are insufficient.

2. The method according to claim 1, wherein after the cloud management platform converts, according to the first cloud resource type conversion policy, the type attribute of the cloud resource from the stable cloud resource type to the unstable cloud resource type, the cloud resource type conversion interface is further configured to receive a second cloud resource type conversion policy input by the tenant, wherein the second cloud resource type conversion policy indicates to convert the type attribute of the cloud resource from the unstable cloud resource type to the stable cloud resource type; and the method further comprises:

converting, by the cloud management platform, the type attribute of the cloud resource from the unstable cloud resource type to the stable cloud resource type, performing billing on use of the cloud resource in a non-preferential manner, and keeping providing the cloud resource for the tenant when the tenant does not actively release the cloud resource and the idle resources are insufficient.

3. The method according to claim 2, wherein the method further comprises:

counting, by the cloud management platform, type attribute conversion times of the cloud resource, and when the type attribute conversion times of the cloud resource exceed a threshold, forbidding performing next conversion, or charging the tenant for the next conversion.

4. The method according to any one of claims 1 to 3, wherein the cloud management platform calculates a type attribute conversion ratio of the cloud resource, and when the type attribute conversion ratio of the cloud resource exceeds a threshold, forbids performing conversion, or charges the tenant.

5. The method according to any one of claims 1 to 4, wherein after the cloud management platform creates, in the infrastructure based on the cloud resource configuration information, the cloud resource that belongs to the tenant and has the specification and the type attribute, the method comprises:

performing billing, by the cloud management platform, on use of the cloud resource in the non-preferential manner based on the stable cloud resource type indicated by the type attribute, and keeping providing the cloud resource for the tenant when the tenant does not actively release the cloud resource and the idle resources are insufficient.

6. The method according to any one of claims 1 to 5, wherein the stable cloud resource type is any one of a pay-per-use billing type, a yearly/monthly billing type, and a reserved instance type.

7. The method according to any one of claims 1 to 6, wherein the unstable cloud resource type is a spot pricing billing type or a spot block billing type.

8. The method according to any one of claims 1 to 7, wherein the cloud resource is any one of a computing resource, a network resource, or a storage resource.

9. A public cloud-based cloud resource conversion method, wherein the method is applied to a cloud management platform, the cloud management platform is configured to manage an infrastructure that provides a public cloud service, the infrastructure comprises a plurality of cloud data centers disposed in different regions, and at least one cloud data center is disposed in each region; and the method comprises:

receiving, by the cloud management platform from a cloud resource configuration interface, cloud resource configuration information input by a tenant, wherein the cloud resource configuration information comprises a specification and a type attribute of a to-be-created cloud resource, and the type attribute indicates that the cloud resource is an unstable cloud resource type;

creating, by the cloud management platform in the infrastructure based on the cloud resource configuration information, a cloud resource that has the specification and the type attribute and that is used by the tenant;

receiving, by the cloud management platform from a cloud resource type conversion interface, a first cloud resource type conversion policy input by the tenant, wherein the first cloud resource type conversion policy indicates to convert the type attribute of the cloud resource from the unstable cloud resource type to a stable cloud resource type; and

converting, by the cloud management platform, the type attribute of the cloud resource from the unstable cloud resource type to the stable cloud resource type, performing billing on use of the cloud resource in a non-preferential manner, and keeping providing the cloud resource for the tenant when the tenant does not actively release the cloud resource and idle resources are insufficient.

10. The method according to claim 9, wherein after the cloud management platform converts, according to the first cloud resource type conversion policy, the type attribute of the cloud resource from the unstable cloud resource type to the stable cloud resource type, the cloud resource type conversion interface is further configured to receive a second cloud resource type conversion policy input by the tenant, wherein the second cloud resource type conversion policy indicates to convert the type attribute of the cloud resource from the stable cloud resource type to the unstable cloud resource type; and the method further comprises:

converting, by the cloud management platform, the type attribute of the cloud resource from the stable cloud resource type to the unstable cloud resource type, performing billing on use of the cloud resource in a preferential manner, and stopping providing the cloud resource for the tenant when the tenant does not actively release the cloud resource and the idle resources are insufficient.

11. The method according to claim 10, wherein the method further comprises:

counting, by the cloud management platform, type attribute conversion times of the cloud resource, and when the type attribute conversion times of the cloud resource exceed a threshold, forbidding performing next conversion, or charging the tenant for the next conversion.

12. The method according to any one of claims 9 to 11, wherein the cloud management platform calculates a type attribute conversion ratio of the cloud resource, and when the type attribute conversion ratio of the cloud resource exceeds a threshold, forbids performing conversion, or charges the tenant.

13. The method according to any one of claims 9 to 12, wherein after the cloud management platform creates, in the infrastructure based on the cloud resource configuration information, the cloud resource that belongs to the tenant and has the specification and the type attribute, the method comprises:

performing billing, by the cloud management platform, on use of the cloud resource in the preferential manner based on the unstable cloud resource type indicated by the type attribute, and stopping providing the cloud resource for the tenant when the tenant does not actively release the cloud resource and the idle resources are insufficient.

14. The method according to any one of claims 9 to 13, wherein the stable cloud resource type is any one of a pay-per-use billing type, a yearly/monthly billing type, and a reserved instance type.

15. The method according to any one of claims 9 to 14, wherein the unstable cloud resource type is a spot pricing billing type or a spot block billing type.

16. The method according to any one of claims 9 to 15, wherein the cloud resource is any one of a computing resource, a network resource, or a storage resource.

17. A cloud management platform, wherein the cloud management platform is configured to manage an infrastructure that provides a public cloud service, the infrastructure comprises a plurality of cloud data centers disposed in different regions, and at least one cloud data center is disposed in each region; and the cloud management platform comprises:

a cloud resource configuration interface provision module, configured to provide a cloud resource configuration interface, wherein the cloud resource configuration interface is configured to receive cloud resource configuration information input by a tenant, the cloud resource configuration information comprises a specification and a type attribute of a to-be-created cloud resource, and the type attribute indicates that the cloud resource is a stable cloud resource type;

a cloud resource creation module, configured to create, in the infrastructure based on the cloud resource configuration information, a cloud resource that has the specification and the type attribute and that is used by the tenant;

a cloud resource conversion interface provision module, configured to provide a cloud resource type conversion interface, wherein the cloud resource type conversion interface is configured to receive a first cloud resource type conversion policy input by the tenant, and the first cloud resource type conversion policy indicates to convert the type attribute of the cloud resource from the stable cloud resource type to an unstable cloud resource type; and a cloud resource type conversion module, configured to: convert the type attribute of the cloud resource from the stable cloud resource type to the unstable cloud resource type, perform billing on use of the cloud resource in a preferential manner, and stop providing the cloud resource for the tenant when the tenant does not actively release the cloud resource and idle resources are insufficient.

18. The cloud management platform according to claim 17, wherein after the cloud resource type conversion module converts, according to the first cloud resource type conversion policy, the type attribute of the cloud resource from the stable cloud resource type to the unstable cloud resource type, the cloud resource type conversion interface is further configured to receive a second cloud resource type conversion policy input by the tenant, wherein the second cloud resource type conversion policy indicates to convert the type attribute of the cloud resource from the unstable cloud resource type to the stable cloud resource type; and
the cloud resource type conversion module converts the type attribute of the cloud resource from the unstable cloud resource type to the stable cloud resource type, performs billing on use of the cloud resource in a non-preferential manner, and keeps providing the cloud resource for the tenant when the tenant does not actively release the cloud resource and the idle resources are insufficient.

19. The cloud management platform according to claim 18, wherein the cloud management platform further comprises:
a cloud resource type conversion times counting module, configured to: count type attribute conversion times of the cloud resource, and when the type attribute conversion times of the cloud resource exceed a threshold, forbid performing next conversion, or charge the tenant for the next conversion.

20. The cloud management platform according to any one of claims 17 to 19, wherein the cloud management platform further comprises:
a cloud resource type conversion ratio calculation module, configured to: calculate a type attribute conversion ratio of the cloud resource, and when the type attribute conversion ratio of the cloud resource exceeds a threshold, forbid performing conversion, or charge the tenant.

21. The cloud management platform according to any one of claims 17 to 20, wherein after the cloud resource creation module creates, in the infrastructure based on the cloud resource configuration information, the cloud resource that belongs to the tenant and has the specification and the type attribute,
the cloud resource type conversion module performs billing on use of the cloud resource in the non-preferential manner based on the stable cloud resource type indicated by the type attribute, and keeps providing the cloud resource for the tenant when the tenant does not actively release the cloud resource and the idle resources are insufficient.

22. The cloud management platform according to any one of claims 17 to 21, wherein the stable cloud resource type is any one of a pay-per-use billing type, a yearly/monthly billing type, and a reserved instance type.

23. The cloud management platform according to any one of claims 17 to 22, wherein the unstable cloud resource type is a spot pricing billing type or a spot block billing type.

24. The cloud management platform according to any one of claims 17 to 23, wherein the cloud resource is any one of a computing resource, a network resource, or a storage resource.

25. A cloud management platform, wherein the cloud management platform is configured to manage an infrastructure that provides a public cloud service, the infrastructure comprises a plurality of cloud data centers disposed in different regions, and at least one cloud data center is disposed in each region; and the cloud management platform comprises:

a cloud resource configuration interface provision module, configured to provide a cloud resource configuration interface, wherein the cloud resource configuration interface is configured to receive cloud resource configuration information input by a tenant, the cloud resource configuration information comprises a specification and a type attribute of a to-be-created cloud resource, and the type attribute indicates that the cloud resource is an unstable cloud resource type;
a cloud resource creation module, configured to create, in the infrastructure based on the cloud resource configuration information, a cloud resource that has the specification and the type attribute and that is used by the tenant;

a cloud resource conversion interface provision module, configured to provide a cloud resource type conversion interface, wherein the cloud resource type conversion interface is configured to receive a first cloud resource type conversion policy input by the tenant, and the first cloud resource type conversion policy indicates to convert the type attribute of the cloud resource from the unstable cloud resource type to a stable cloud resource type; and

a cloud resource type conversion module, configured to: convert the type attribute of the cloud resource from the unstable cloud resource type to the stable cloud resource type, perform billing on use of the cloud resource in a non-preferential manner, and keep providing the cloud resource for the tenant when the tenant does not actively release the cloud resource and idle resources are insufficient.

26. The cloud management platform according to claim 25, wherein after the cloud resource type conversion module converts, according to the first cloud resource type conversion policy, the type attribute of the cloud resource from the unstable cloud resource type to the stable cloud resource type, the cloud resource type conversion interface is further configured to receive a second cloud resource type conversion policy input by the tenant, wherein the second cloud resource type conversion policy indicates to convert the type attribute of the cloud resource from the stable cloud resource type to the unstable cloud resource type; and

the cloud resource type conversion module converts the type attribute of the cloud resource from the stable cloud resource type to the unstable cloud resource type, performs billing on use of the cloud resource in a preferential manner, and stops providing the cloud resource for the tenant when the tenant does not actively release the cloud resource and the idle resources are insufficient.

27. The cloud management platform according to claim 26, wherein the cloud management platform further comprises:
a cloud resource type conversion times counting module, configured to: count type attribute conversion times of the cloud resource, and when the type attribute conversion times of the cloud resource exceed a threshold, forbid performing next conversion, or charge the tenant for the next conversion.

28. The cloud management platform according to claims 25 to 27, wherein the cloud management platform further comprises:
a cloud resource type conversion ratio calculation module, configured to: calculate a type attribute conversion ratio of the cloud resource, and when the type attribute conversion ratio of the cloud resource exceeds a threshold, forbid performing conversion, or charge the tenant.

29. The cloud management platform according to claims 25 to 28, wherein after the cloud resource creation module creates, in the infrastructure based on the cloud resource configuration information, the cloud resource that belongs to the tenant and has the specification and the type attribute,
the cloud resource type conversion module performs billing on use of the cloud resource in the preferential manner based on the unstable cloud resource type indicated by the type attribute, and stops providing the cloud resource for the tenant when the tenant does not actively release the cloud resource and the idle resources are insufficient.

30. The cloud management platform according to claims 25 to 29, wherein the stable cloud resource type is any one of a pay-per-use billing type, a yearly/monthly billing type, and a reserved instance type.

31. The cloud management platform according to claims 25 to 30, wherein the unstable cloud resource type is a spot pricing billing type or a spot block billing type.

32. The cloud management platform according to claims 25 to 31, wherein the cloud resource is any one of a computing resource, a network resource, or a storage resource.

33. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 8 or 9 to 16.

34. A computer program product comprising instructions, wherein when the instructions are run by a computing device cluster, the computing device cluster is enabled to perform the method according to any one of claims 1 to 8 or 9 to 16.

**35.** A computer-readable storage medium, comprising computer-readable instructions, wherein when the computer program instructions are executed by a computing device cluster, the computing device cluster performs the method according to any one of claims 1 to 8 or 9 to 16.

Region 2

Cloud data center A | Cloud data center B | ... | Cloud data center C

Region 3

Cloud data center A | Cloud data center B | ... | Cloud data center C

Region 1

Cloud data center A | Cloud data center B | ... | Cloud data center C

Cloud management platform 10

Internet 30

Tenant 40

Client 20

FIG. 1

Cloud management platform 10

Client 20

S101: Provide a cloud resource configuration interface

S102: A tenant 40 inputs cloud resource configuration information A

S103: Create, in an infrastructure based on the cloud resource configuration information A input by the tenant 40 to the cloud resource configuration interface, a cloud resource that belongs to the tenant 40

S104: Provide a cloud resource type conversion interface

S105: The tenant 40 inputs a cloud resource type conversion policy A through the cloud resource type conversion interface

S106: Convert a type attribute of the cloud resource of the tenant 40 from a stable cloud resource type to an unstable cloud resource type according to the cloud resource type conversion policy A input by the tenant 40

S107: The tenant 40 inputs a cloud resource type conversion policy B through the cloud resource type conversion interface

S108: Convert the type attribute of the cloud resource of the tenant 40 from the stable cloud resource type to the unstable cloud resource type according to the cloud resource type conversion policy B input by the tenant 40

FIG. 2

| Cloud management platform 10 | Client 20 |

**S201: Provide a cloud resource configuration interface**

S202: A tenant 40 inputs cloud resource configuration information B

**S203: Create, in an infrastructure based on the cloud resource configuration information B input by the tenant 40, a cloud resource that belongs to the tenant 40**

**S204: Provide a cloud resource type conversion interface**

S205: The tenant inputs a cloud resource type conversion policy D through the cloud resource type conversion interface 40

**S206: Convert a type attribute of the cloud resource of the tenant 40 from an unstable cloud resource type to a stable cloud resource type according to the cloud resource type conversion policy C input by the tenant 40**

S207: The tenant 40 inputs a cloud resource type conversion policy D through the cloud resource type conversion interface

**S208: Convert the type attribute of the cloud resource of the tenant 40 from the stable cloud resource type to the unstable cloud resource type according to the cloud resource type conversion policy D input by the tenant 40**

FIG. 3

Cloud resource configuration
interface provision module 101

Cloud resource creation module
102

Cloud resource conversion
interface provision module 103

Cloud resource type conversion
module 104

Cloud resource type conversion
times counting module 105

Cloud management
platform 10

Cloud resource type conversion
ratio calculation module 106

FIG. 4

Processor 109

Communication interface 110

Bus 107

Memory 108

| Cloud resource configuration interface provision module 101 | Cloud resource creation module 102 | Cloud resource conversion interface provision module 103 |
|---|---|---|
| Cloud resource type conversion module 104 | Cloud resource type conversion times counting module 105 | Cloud resource type conversion ratio calculation module 106 |

Computing device 100

FIG. 5

FIG. 6

## INTERNATIONAL SEARCH REPORT

| International application No. |
| --- |
| **PCT/CN2023/113707** |

| A. | CLASSIFICATION OF SUBJECT MATTER |
| --- | --- |

H04L 12/14(2006.01)i;  G06F9/50(2006.01)i

According to International Patent Classification (IPC) or to both national classification and IPC

| B. | FIELDS SEARCHED |
| --- | --- |

Minimum documentation searched (classification system followed by classification symbols)

IPC： H04L G06F

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 云, 资源, 切换, 按需, 竞价, cloud, resource, switch, on demand, price competition

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114461374 A (HUAWEI CLOUD COMPUTING TECHNOLOGY CO., LTD.) 10 May 2022 (2022-05-10)<br>description, paragraphs [0048]-[0197], and figures 1-11 | 1-35 |
| A | CN 106339924 A (SOUTHEAST UNIVERSITY) 18 January 2017 (2017-01-18)<br>entire document | 1-35 |
| A | CN 109542580 A (ZTE CORP.) 29 March 2019 (2019-03-29)<br>entire document | 1-35 |
| A | CN 104333457 A (HANGZHOU H3C TECHNOLOGIES CO., LTD.) 04 February 2015 (2015-02-04)<br>entire document | 1-35 |
| A | CN 107124304 A (QIANXUN SPATIAL INTELLIGENCE INC.) 01 September 2017 (2017-09-01)<br>entire document | 1-35 |
| A | US 2018316751 A1 (MICROSOFT TECHNOLOGY LICENSING LLC.) 01 November 2018 (2018-11-01)<br>entire document | 1-35 |

☐ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **14 November 2023** | **21 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/113707**

| Patent document cited in search report | | | Publication date (day/month/year) | Patent family member(s) | | | Publication date (day/month/year) |
|---|---|---|---|---|---|---|---|
| CN | 114461374 | A | 10 May 2022 | None | | | |
| CN | 106339924 | A | 18 January 2017 | None | | | |
| CN | 109542580 | A | 29 March 2019 | None | | | |
| CN | 104333457 | A | 04 February 2015 | None | | | |
| CN | 107124304 | A | 01 September 2017 | None | | | |
| US | 2018316751 | A1 | 01 November 2018 | WO | 2018200162 | A1 | 01 November 2018 |
| | | | | US | 10547672 | B2 | 28 January 2020 |

Form PCT/ISA/210 (patent family annex) (July 2022)